# EUROPEAN PATENT APPLICATION

(11) **EP 1 790 992 A1**
(43) Date of publication of application: **30.05.2007**
(21) Application number: 05025672.6
(22) Date of filing: 24.11.2005
(51) Int. Cl.: G01S 5/02

(54) **Position tracking system and method thereof**

(71) Applicant: Fortuna Electronic Corp., Jhongshan District Taipei City 104 (TW)
(72) Inventor: Lin, Frank c/o Fortuna Electronic Corp., Jhongshan District Taipei 104 (TW)
(74) Representative: Urner, Peter

(57) **Abstract**

A position tracking system and method applied to a data processing device having a communication capability. The method at least has the steps of: processing received positioning messages into positioning data that can be recognized by the data processing device and comprise at least the positioning messages; transmitting the positioning data to another data processing device having a communication capability via a communication network; and actuating the another data processing device to process the received positioning data so as to obtain current positioning messages of the data processing device that transmits the positioning data. Thereby, transmission of positioning messages between a plurality of data processing devices having communication capability can be accomplished without having to connect to a positioning message processing center.

## Description

### FIELD OF THE INVENTION

The present invention relates to position tracking systems and methods, and more particularly, to a position tracking system and method that can be applied to a data processing device having a communication capability.

### BACKGROUND OF THE INVENTION

Along with the rapid development of communication technology, portable communication products such as mobile phones and the Global Positioning System (GPS) technologies are indispensable to the field of technology development. GPS technology, for example, only requires users to have GPS receiving devices installed in automobiles for receiving satellite communication data, which can be transmitted by a wireless communication platform and a communication base station to a specific satellite service network via a dedicated line. Thereby, users may connect to the service network at anytime and anywhere as desired to grasp the driving conditions instantaneously (such as the position, speed, time, direction, loading and unloading status of cargos, etc.).

The application of the foregoing GPS technology becomes more popular after the U.S. Defense Department's release of satellite channels for commercial use. Additionally, the continuing progress made on software/hardware capabilities in portable data processing devices (such as palm computers, pocket computers, vehicle-mounted computers, notebooks, and personal digital assistants (PDAs) etc.), the maturity in miniaturization, high-precision and high-reliability of the satellite positioning messages receiving modules applied to the portable data processing devices, are main factors that have encouraged more and more consumers to accept the integration of data processing devices with GPS technology in their daily lives. Such a trend can be seen first in vehicle-selling businesses, in which the GPS has become standard equipment for high-end vehicles, and as far as the economic-ranged car is concerned, consumers are also provided with optional satellite positioning service. Even if the vehicle manufacturers do not reserve a space for accommodating the positioning system, consumers can still achieve and employ the same satellite positioning service by purchasing the required hardware devices and software modules. The application of satellite positioning system can provide drivers with immediate driving information that was impossible to obtain before, thereby providing greater safety and efficiency in driving.

While the satellite positioning system can actually provide users with required positioning messages, users can only obtain their own positioning messages but not others unless the system connects to an information processing center such as a control center or an added-value service center. For instance, when a fleet of rescue cars enter into the mountains, and the driver of a car A wishes to locate the position of a car B relative to his/her own corresponding position, he/she has to connect via an information processing center such as a control center or an added-value service center that respectively connects both cars A and B such that information can be transmitted therebetween to obtain positioning messages of one another. Otherwise, manual intercommunication between cars A and B has to be performed, which obviously cannot instantaneously provide sufficient accuracy in position calculation in a real-time manner. While control centers or added-value service centers can provide immediate positioning services, services of this kind mostly charge service fees that do not count based on the number of using times, in other words, for non-frequent users this kind of paying service is not economical. Even if users are willing to pay for the charged satellite service, they are usually required to apply for such service ahead of time. Moreover, added-value services provided by many vehicle manufacturers often do not provide service or attend to the needs of other users having vehicles of different brands, thereby undesirably inconveniencing consumers and lacking application flexibility. The positioning and navigation function mentioned above can only be fixed and applied to vehicles, so users cannot take full advantage of the convenience of the satellite positioning system in their daily lives.

Therefore, there is a need to provide an improved technology capable of implementing and achieving positioning and tracking information transmission between corresponding devices without having to connect to an information processing center, thereby allowing users to obtain accurate and immediate positioning messages.

### SUMMARY OF THE INVENTION

In light of the drawbacks in the prior arts, a primary objective of the present invention is to provide a position tracking system and method for implementing and achieving positioning and tracking information transmission between corresponding devices without having to connect to an information processing center.

Another objective of the present invention is to provide a position tracking system and method for implementing positioning and tracking information transmission between corresponding devices using an existing communication network.

Still another objective of the present invention is to provide a position tracking system and method for changing the number of targets for which the position tracking function would be performed according to a user's needs.

Another objective of the present invention is to provide a position tracking system and method for performing positioning and tracking in a one-way, a dual-way, or a multi-way operation according to a user's needs.

To achieve the above and other objectives, the present invention proposes a position tracking system applied to a data processing device having communication capability, the system comprises: a positioning message receiving module for receiving the positioning messages; an information processing unit for processing the received positioning messages into positioning data that can be recognized by the data processing device and at least further comprise the positioning messages; a signal transmission module for receiving and transmitting the positioning data via a communication network. In addition, the position tracking system further comprises a setting module for setting a one-way, a dual-way, or a multi-way positioning function and the target(s) thereof.

By the position tracking system, the method for implementing position tracking operations comprises: first, processing received positioning messages into positioning data that can be recognized by a data processing device and further at least comprise the positioning messages; next, transmitting the positioning data to another data processing device having communication capability via a communication network; and actuating the data processing device that received the positioning data to process the received positioning data and obtain the current positioning messages of the data processing device that transmitted the positioning data.

Compared to the positioning technology known in the prior art, the position tracking system and method of the present invention can implement and achieve positioning and tracking information transmission between corresponding devices without having to connect to an information processing center. Furthermore, the position tracking system and method of the present invention is capable of changing the number of targets for which the position tracking function would be performed as required by a user, and further setting a one-way, dual-way, or multi-way position tracking implementations according to a user's needs.

### BRIEF DESCRIPTION OF THE DRAWINGS

The present invention can be more fully understood by reading the following detailed description of the preferred embodiments, with reference made to the accompanying drawings, wherein:
FIG. 1 is a schematic diagram showing a structure of a position tracking system according to the present invention; and
FIG. 2 is a flowchart showing the implementation of a position tracking method using the position tracking system according to the present invention.

### DETAILED DESCRIPTION OF THE PREFFERED EMBODIMENT

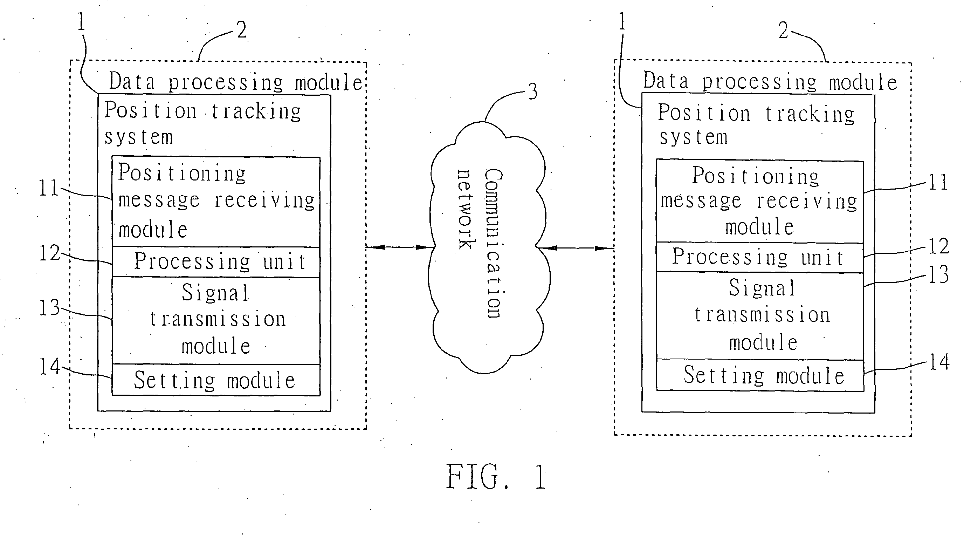

Fig. 1 shows the structure of a position tracking system of the present invention. As shown, the position tracking system 1 of the present invention is applied to a data processing device 2 having communication capability, the data processing device can comprise be a portable data processing device such as a palm computer, a pocket computer, a PDA (Personal Digital Assistants), a notebook computer or a mobile phone. Besides the characteristic of portability, the data processing device 2 also possesses a communication capability, such as a wireless phone communication capability including GSM, PHS, GPRS, or CDMA, etc. Alternatively, the communication capability of the data processing device 2 can be a wireless communication capability, such as a long-range frequency modulation wireless communication, a short-range infrared wireless transmission or a Bluetooth wireless transmission. By the provision of the communication network 3, a plurality of data processing devices 2 compatible with the specification of the communication network 3 can be allowed to transmit data between each other. It is to be noted that the data processing device 2 shall include all kinds of data processing devices having the equivalents of the foregoing characteristics obvious to those skilled in the art.

The position tracking system 1 comprises a positioning message receiving module 11, a processing unit 12, a signal transmission module 13, and a setting module 14.

The positioning message receiving module 11 is adapted to receive positioning messages. In the preferred embodiment, the positioning messages are provided by an existing GPS positioning system, therefore, the positioning message receiving module 11 at least comprises a receiving module and a signal converting unit (not shown) for receiving GPS positioning messages via a GPS communication network, and converting the received analog positioning messages into digital signals for allowing the data processing device 2 to process data subsequently. The positioning message receiving module 11 may be an integrated hardware or firmware in the data processing device 2, or an individual hardware or firmware connected to the data processing device 2 via a specific transmission interface.

The processing unit 12 is used to process the received positioning messages to positioning data that can be recognized by the data processing device 2 and at least comprise the positioning messages. In this embodiment, after the positioning message receiving module 11 receives and converts the analog positioning messages into digital signals, the digital signals are immediately sent to the processing unit 12 to be converted into displayable information to be displayed on a display unit (not shown) of the data processing device 2. It is to be noted that, when the processing unit 12 receives positioning messages from different data processing devices, the processing unit 12 can display positions of different data processing devices on the display unit thereof. Preferably, through the reciprocal information provided by one another, relative information between other data processing devices 2 and the current data processing device 2 to which the processing unit 12 belongs can be obtained, such as information of absolute locations, relative distances, orientations, and the longitude and latitude position coordinates.

The signal transmission module 13 is used to receive and transmit the positioning data via a communication network 3. In this embodiment, the communication network 3 is a GSM communication network, that is, the GSM communication network acts as a transmission medium for transmitting the positioning data between the plurality of the data processing devices 2, and the GSM communication network can be a private-owned or government-owned GSM system provider. For further consideration of a wide band data transmission, an existing GPRS system can be utilized. Further, the signal transmission module 13 may maintain connection with the communication network provider when implementing the position tracking system 1 in order to obtain real-time positioning messages from other data processing devices. On the other hand, if no real-time positioning is required, it may connect to the communication network provider when required.

The setting module 14 is used for setting implementations of a one-way, a dual-way, or a multi-way positioning and tracking modes and the targets thereof. In the preferred embodiment, the setting module 14 is used to provide users to set the position tracking modes between the plurality of the data processing devices 2. For instance, in a case of three data processing devices 2, one of the three data processing devices 2 can be set as the target to be located and tracked but cannot obtain the positioning messages of the other two devices; or only two of the data processing devices can locate and track each other while the remaining data processing device 2 can locate and track the positions of the two data processing devices 2; or all three data processing devices 2 can locate and track each other. Preferably, the setting module 14 can provide users to set a usage authority and identification, thereby allowing the position of a user to be located and tracked by a specific target only, or a user to locate and track the position of a specific target, or position tracking between a user and a specific target concurrently, depending on the different authorities identified. Additionally, the setting module 14 can also provide a function of selecting targets for being located and tracked, in this preferred embodiment, it may be set to limit reception of the positioning messages only from a certain data processing device 2, or limit transmission of the positioning messages only to a certain data processing device 2.

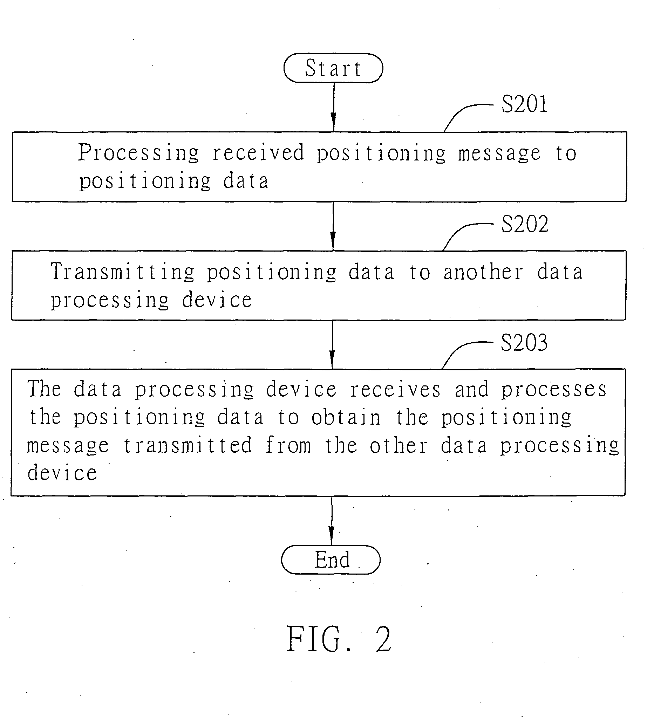

FIG. 2 is a flowchart showing the execution of position tracking method using the position tracking system of the present invention. In the step S201, the received positioning messages are processed to become positioning data that can be recognized by the data processing device and at least comprise the positioning messages. In this embodiment, the positioning messages are provided by the existing GPS positioning system, and the received analog positioning messages are received and converted to digital signals by the GPS signal receiving module and the signal converting unit of the positioning message receiving module. Next, it proceeds to step S202.

In the step S202, the positioning data are transmitted via the communication network to another data processing device having communication capability, in other words, positioning data are received and transmitted by the signal transmission module via the communication network. In this embodiment, the communication network is a GSM communication network, that is, the GSM communication network serves as a transmission medium to allow the plurality of the data processing devices to transmit positioning data between one another. Then, it proceeds to step S203.

In the step S203, the data processing device processes the received positioning data to obtain the positioning messages of those data processing devices that transmitted the positioning data. In this embodiment, after the positioning message receiving module receives and converts the analog positioning messages into digital signals, the digital signals are then transmitted to other data processing devices via the signal transmission module. Subsequently, the processing unit of the data processing device receives the positioning data and converts the digital signals to a displayable message, and displays the positioning message on a display unit of the data processing device using an application program such as an electronic map. Preferably, through the reciprocal information provided by one another, relative information between other data processing devices 2 and the data processing device 2 to which the current processing unit belongs can be derived, such as information of the distances, the orientations, and the longitude and latitude position coordinates.

In addition, prior to executing step S201, it further includes a step of setting authority for usage and identification. That is, it provides setting functions to set authority for the plurality of the data processing devices to allow different position tracking modes to be preformed according to different levels of authority identified.

In conclusion, the position tracking system and method of the present invention can implement positioning and tracking information transmission between corresponding devices through an existing communication network without having to connect to an information processing center. Furthermore, the position tracking system and method of the present invention is capable of setting the targets to be tracked or to track positions, and further setting implementations of a one-way, a dual-way, or a multi-way position tracking modes according to a user's needs.

The invention has been described using exemplary preferred embodiments. However, it is to be understood that the scope of the invention is not limited to the disclosed embodiments. On the contrary, it is intended to cover various modifications and similar arrangements. The scope of the claims, therefore, should be accorded the broadest interpretation so as to encompass all such modifications and similar arrangements.

## Claims

1. A position tracking system applicable to a data processing device having a communication capability, the position tracking system comprising:
a positioning message receiving module for receiving positioning messages;
a processing unit for processing the positioning messages into positioning data that are recognizable by the data processing device and comprise at least the positioning messages; and
a signal transmission module for receiving and transmitting the positioning data via a communication network.

2. The position tracking system of claim 1, further comprising:
a setting module for setting a one-way, dual-way or multi-way position tracking mode and at least one target thereof.

3. The position tracking system of claim 2, wherein the setting module is further for providing functions for setting and identifying a usage authority level to select the position tracking mode and target thereof according to different levels of authority identified.

4. The position tracking system of claim 1, wherein the data processing device is a portable data processing device selected from the group consisting of a palm computer, a pocket computer, a notebook computer, a mobile phone, and a personal digital assistant (PDA).

5. The position tracking system of claim 1, wherein the communication capability of the data processing device is a capability for wireless phone communication selected from the group consisting of GSM, PHS, GPRS, and CDMA.

6. The position tracking system of claim 1, wherein the communication capability of the data processing device is a capability for wireless communication selected from the group consisting of a long-range frequency modulation wireless communication, a short-range infrared wireless transmission, and a Bluetooth wireless transmission.

7. The position tracking system of claim 1, wherein the positioning message receiving module further comprises:
a receiving module for receiving GPS positioning messages via a GPS communication network; and
a signal converting unit for converting the received positioning messages that are analog into digital signals for being processed by the data processing device.

8. The position tracking system of claim 1, wherein the positioning message receiving module comprises at least one of hardware and firmware that are integrated in the data processing device.

9. The position tracking system of claim 1, wherein the positioning message receiving module comprises at least one of hardware and firmware that are external to the data processing device and are connected to the data processing device via a transmission interface.

10. The position tracking system of claim 1, wherein when the processing unit receives positioning data transmitted from different data processing devices, the processing unit further obtains relative information between the data processing device comprising the processing unit and the other data processing devices according to the positioning data, the relative information comprising at least one of absolute locations, relative distances, orientations, and longitude and latitude position coordinates.

11. A position tracking method applicable to a data processing device having a communication capability, the position tracking method comprising the steps of:
processing received positioning messages into positioning data that are recognizable by the data processing device and comprise at least the positioning messages;
transmitting the positioning data via the data processing device to another data processing device having a communication capability through a communication network; and
actuating the another data processing device that receives the positioning data to process the received positioning data so as to obtain current positioning messages of the data processing device that transmits the positioning data.

12. The position tracking method of claim 11, further comprising a step of identifying a usage authority level to allow the data processing device to select a position tracking mode and at least one target thereof according to the identified authority level.

13. The position tracking method of claim 11, wherein the data processing device is a portable data processing device selected from the group consisting of a palm computer, a pocket computer, a notebook, a mobile phone, and a personal digital assistant (PDA).

14. The position tracking method of claim 11, wherein the communication capability of the data processing device is a capability for wireless phone communication selected from the group consisting of GSM, PHS, GPRS, and CDMA.

15. The position tracking method of claim 11, wherein the communication capability of the data processing device is a capability for wireless communication selected from the group consisting of a long-range frequency modulation wireless communication, a short-range infrared wireless transmission, and a Bluetooth wireless transmission.

16. The position tracking method of claim 11, wherein the another data processing device is actuated to process the received positioning data to further obtain relative information between the data processing device and the another data processing device according to the positioning data, the relative information comprising at least one of absolute locations, relative distances, orientations, and longitude and latitude position coordinates.
